# EUROPEAN PATENT SPECIFICATION

(11) **EP 0 934 172 B1**
(45) Date of publication and mention of the grant of the patent: **02.02.2005**
(21) Application number: 97944649.9
(22) Date of filing: 28.10.1997
(51) Int. Cl.: B60G 21/06, B60G 21/067, B60G 21/073

(54) **LOAD DISTRIBUTION UNIT FOR VEHICLE SUSPENSION SYSTEM**
LASTVERTEILUNGSEINHEIT FÜR FAHRZEUGAUFHÄNGUNGSSYSTEM
UNITE DE REPARTITION DE CHARGE POUR UN SYSTEME DE SUSPENSION D'UN VEHICULE

(30) Priority: 31.10.1996 AU PO336296; 07.11.1996 AU PO350596
(43) Date of publication of application: 11.08.1999
(73) Proprietor: KINETIC LIMITED, Dunsborough, W.A. 6281 (AU)
(72) Inventor: HEYRING, Christopher, Brian, Eagle Bay, W.A. 6281 (AU); MONK, Richard, Dunsborough, W.A. 6281 (AU)
(74) Representative: Ajello, Michael John
(86) International application number: PCT/AU1997/000719
(87) International publication number: WO 1998/018641

(56) References cited:
- WO-A-93/01948
- WO-A-95/23076
- GB-A- 2 071 587
- US-A- 5 447 332

## Description

The present invention is generally directed to vehicle suspension systems, and in particular to a load distribution unit for a vehicle suspension system.

The applicant has previously developed a vehicle fluid suspension system including a load distribution unit which performs the function of redistributing fluid between two pairs of diagonally interconnected double-acting or four single-acting rams respectively provided at each wheel assembly of the vehicle during cross-axle articulation motions, whilst opposing roll motions and introducing a controlled magnitude of pitch resilience. Such a suspension system is described in the applicant's International Application No. WO 95/23076. However, in the system described therein the pitch resilience is damped at normal running speeds whereas low speed damping of the pitch resilience is also highly desirable. Pitch stiffness, or damping of pitch resilience, is provided by resilient blocks and a separate, parallel damper cylinder.

The present invention relates to an improved construction of said load distribution unit which can provide the required roll and pitch stiffness while providing minimal cross-axle articulation stiffness, but with reduced volume and weight of the previous arrangement by more than 30% thereby increasing the mass production viability of the suspension system as a whole.

With this in mind, according to one aspect of the present invention, there is provided a load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein; characterised in that
the load distribution unit includes two pairs of axially aligned fluid chambers, each fluid chamber being divided into two control chambers by a piston supported therein, in each pair of axially aligned fluid chambers two of the control chambers which vary in volume proportionally and in opposite senses therein with piston motion are system chambers, the remaining two chambers in each pair of axially aligned fluid chambers being bump chambers; in that
the piston of each said axially aligned pair of fluid chambers is interconnected by a connection means, the major chamber of each said wheel ram being in fluid communication with a respective said system chamber, such that the vehicle suspension system provides a roll stiffness and a pitch stiffness while providing minimal cross-axle articulation stiffness; and in that
a fluid communication is provided between pairs of the bump chambers such that the fluid pressure within the communicating bump chambers is transferable therebetween to thereby enable a pressure balance to be achieved between the system chambers.

The connection means interconnecting the pistons may be a rod member extending through the two control chambers in the middle of each pair of axially aligned fluid chambers.

A respective pair of the fluid chambers may be connected to the major chambers of the wheel rams on each side of the vehicle and the pistons located within each said respective pair of fluid chambers may be urged for movement in opposing axial directions to thereby enable the suspension system to resist roll motion by providing a roll stiffness while also providing a minimal cross-axle articulation stiffness.

Furthermore, the piston located within the pair of fluid chambers connected to the major chambers of the wheel rams at the front or rear of the vehicle may be urged for movement in opposing axial directions when the wheel assemblies are undergoing cross-axle articulation motion and may be urged for movement in the same axial direction when the vehicle is undergoing pitch motion to thereby confer minimal articulation stiffness and provide a pitch stiffness which is independent of the roll, four wheel bounce or articulation stiffnesses.

The bump chambers may be in fluid communication with accumulator means to thereby allow for a greater degree of resilience for the vehicle suspension system such that transient vertical motions of the wheel assemblies which can arise when the vehicle is travelling over a speed bump can be accommodated by the load distribution unit.

The fluid chambers may be of differing sizes to enable the pressures in the load distribution unit to be set as required during the design process. Each pair of fluid chambers may be located in parallel adjacent relation. Alternatively, each pair of chambers may be positioned in different positions in the vehicle or aligned along a common axis.

According to a second aspect of the invention, there is provided a load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein, characterised; in that
the load distribution unit includes three fluid chambers aligned along a common axis to thereby provide opposing end chambers and a central chamber therebetween; in that
the end chambers are respectively divided by a piston supported therein into two control chambers, the central chamber being divided by two pistons into two control chambers and a central bump chamber; in that
two of the control chambers which vary in volume proportionally and in opposite senses with piston motion are separate bump chambers, the remaining four control chambers being system chambers; in that
respective connection means interconnect each of the pistons in the central chamber to the piston in an adjacent said end chamber, the major chamber of each said wheel ram being in fluid communication with a respective one of the system chambers, such that the vehicle suspension system provides a roll stiffness and a pitch stiffness while providing minimal cross-axle articulation stiffness; and in that
the two separate bump chambers of each end chamber are in fluid communication such that the fluid pressure within the communicating bump chambers is transferable therebetween to thereby enable a pressure balance to be achieved between the system chambers.

The connection means interconnecting the pistons may be a rod member extending through a said control chamber of the central chamber and a said control chamber of the end chamber adjacent thereto.

The two separate bump chambers may be in fluid communication with an accumulator means, and the central bump chamber may be in fluid communication with an accumulator means.

In devices such as rams and load distribution units described above, the problem of stationary friction or "stiction" where there is an initial resistance to movement of a stationary piston in a chamber can arise. This undesirable effect is especially prevalent in seals where there exists a large pressure difference across the seals which energises the seal firmly into the sealing surface giving high levels of friction. It is commonly found that there is only a certain reduction of the energising force possible (giving a set reduction in friction levels) whilst still maintaining a low fluid loss seal. This friction level can significantly retard the response time of the suspension system which can be detrimental to the ride comfort of the vehicle. The application seeks to overcome this problem by utilising fluid containers having at least a portion which is flexible to function as the chambers of the fluid ram. A similar problem can also arise in a load distribution unit with stiction between the piston seals and the bores, and the rod seals and the rods.

Hence, according to a further aspect of the present invention, there is provided a load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein; characterised in that
the load distribution unit includes a housing divided into a pair of chamber sets, each chamber set including two axially aligned end chambers and a central chamber located and axially aligned therebetween; in that
pistons are respectively located within the central chamber and within each said end chamber, the pistons being interconnected to thereby provide for common movement of the interconnected pistons therein, the piston within the central chamber dividing said chamber into two system chambers, the piston within each said end chamber dividing said end chamber to provide a bump chamber on one side thereof; in that
a flexible fluid container is located within each said system chamber and being respectively in fluid communication with the major chamber of a said wheel ram such that the vehicle suspension system provides a roll stiffness and a pitch stiffness while providing minimal cross-axle articulation stiffness; and in that
a flexible fluid container is located within each bump chamber, with fluid communication being provided between the fluid containers in each pair of bump chambers such that the fluid pressure within the communicating bump chambers is transferable therebetween to thereby enable a pressure balance to be achieved between the system chambers.

Alternatively, the load distribution unit may be arranged as described hereinafter, this alternative form being preferable from the manufacturing and packaging standpoints.

According to yet another aspect of the present invention, there is provided a load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein; characterised in that
the load distribution unit includes a housing divided into a pair of chamber sets, each chamber set including two axially aligned chambers; in that
pistons are respectively located within each said chamber, the pistons being interconnected by a connection means to thereby provide for common movement of the interconnected pistons therein; in that
each piston divides its respective chamber into two control chambers, in each pair of axially aligned chambers, two of the control chambers which in volume are inversely proportional therein with piston motion are system chambers, the remaining two control chambers in each pair of axially aligned chambers being bump chambers; in that
a flexible fluid container is located within each said system chamber and being respectively in fluid communication with the major chamber of a said wheel ram such that the vehicle suspension system provides a roll stiffness and a pitch stiffness while providing minimal cross-axle articulation stiffness; and in that
a flexible fluid container is located within each bump chamber, with fluid communication being provided between the fluid containers of each pair of bump chambers such that the fluid pressure within the communicating bump chambers is transferable therebetween to thereby enable a pressure balance to be achieved between the system chambers.

In the load distribution units as described above, the fluid containers located in the bump chambers and in fluid communication may also be in fluid communication with an accumulation means such as a hydro-pneumatic accumulator.

It is therefore generally possible to use the fluid containers in any of the load distribution units described above to replace the conventional hydro-pneumatic piston/chambers arrangement.

The load distribution unit may be used in a vehicle suspension system wherein the wheel ram is double acting having said major chamber and a minor chamber in which a piston rod of the wheel ram is located, the major chamber of each wheel ram being in direct fluid communication with the minor chamber of a diagonally opposite said wheel ram by a fluid communicating conduit, with each said system chamber of the load distribution unit being a fluid communication with a respective said fluid communicating conduit. Alternatively, the load distribution unit may be used in a vehicle suspension system wherein the wheel rams are single acting.

According to a further aspect of the present invention, there is provided a vehicle suspension system including a load distribution unit as described above.

The vehicle suspension system may be controlled by the control method described in the Applicant's International Application No. PCT/AU 96/00397.

It will be convenient to further describe the invention with reference to the accompanying drawings which illustrate possible embodiments of a load distribution unit according to the present invention, although other arrangements are also envisaged. Consequently, the particularity of the accompanying drawings is not to be understood as superceding the generality of the preceding description of the invention.

In the drawings:-
Figure 1 is a schematic view of a vehicle suspension system incorporating a preferred embodiment of a load distribution unit according to the present invention;
Figure 2 is an enlarged schematic view of the load distribution unit of Figure 1; and
Figures 3 to 6 are schematic views of other alternative preferred embodiments of a load distribution unit according to the present invention.

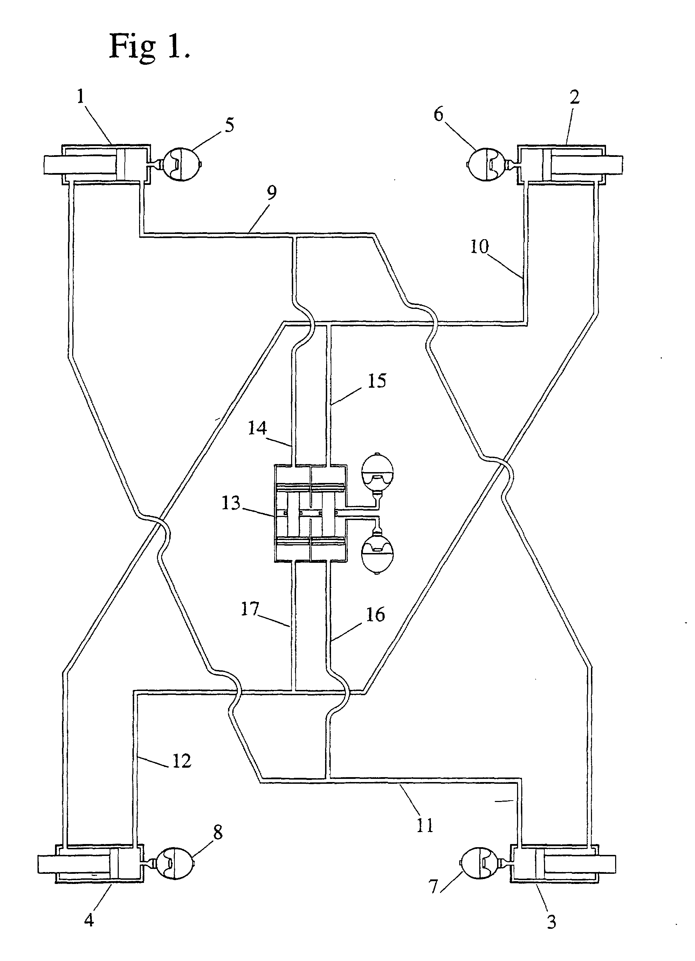

Referring now to Figure 1, there are four double acting hydraulic rams (1,2,3,4) shown interconnected between the vehicle body and the support means of the vehicle (for example, wheels, floats, skis). The layout corresponds to a plan view of the vehicle with the front being towards the top of the page, so the hydraulic ram 4 is associated with the front left support means of the vehicle and the hydraulic ram 4 is associated with the back left support means of the vehicle. Each ram has a hydro-pneumatic accumulator (5, 6, 7, 8) in fluid communication with the major chamber of the ram via a damper valve. The major chamber of each ram is in direct fluid communication with the minor chamber of the diagonally disposed ram by fluid communicating conduits (9, 10, 11, 12). The four fluid communicating conduits are connected to a load distribution unit 13 by respective branch lines (14, 15, 16, 17).

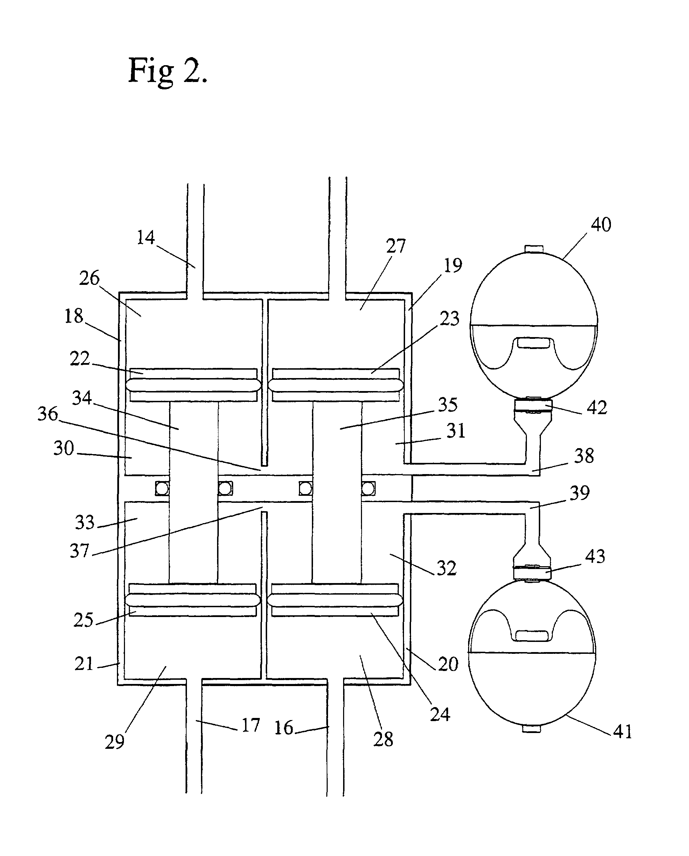

The same first embodiment of the load distribution unit 13 is shown in Figure 2, enlarged for clarity, with the same reference numerals being used for common components.

The load distribution unit 13 comprises two pairs of fluid chambers 18, 21 and 19, 20, each fluid chamber in a pair being aligned along a common axis, the axes of the two pairs being parallel. Each fluid chamber is divided into two chambers by pistons 22, 23, 24, 25 forming a system chamber 26, 27, 28, 29 and a bump chamber 30, 31, 32, 33 in each fluid chamber, the pistons of each adjacent aligned fluid chamber are connected by rods 34, 35. The major chamber of the front left ram 1 is in fluid communication with the front left system chamber 26 of the load distribution unit via conduit 9 and branch line 14. Similarly the system chambers 27, 28, 29 respectively are associated with the major chambers of the front right, back right and back left hydraulic rams 2, 3, 4 respectively.

The bump chambers 30, 31 in the front rams 18, 19 of the load distribution unit are interconnected by a passage 36 and are generally described as front bump chambers since as the front wheels of the vehicle ride over a bump, fluid is displaced from the major chambers of the front rams into the front system chambers of the load distribution unit. This pushes the pistons 22 and 23 rearwards expelling fluid from the front bump chambers along the conduit 38 into the front bump accumulator 40. Since the rods 34, 35 join the rearward pistons 24, 25 to the forward pistons 22, 23, as the front wheels are riding over a bump and the forward pistons 22, 23 are pushed rearwards, fluid is expelled from the back system chambers 28, 29, extending the rear suspension rams. Fluid is also drawn into the back bump chambers 32, 33, which are interconnected by a passage 37, and connected to a back bump accumulator 41 via conduit 39. To damp this motion, damper valves 42, 43 may be provided in the mouths of the bump accumulators.

It is important to note that the locations of the chambers described above is only one of a number of connection arrangements possible with the above style of load distribution unit. For example, the system chambers could all be located in the front forward fluid chambers 18 and 19 giving a mechanical advantage between the front and rear systems which can be used to control roll split. The bump chambers are then accommodated within the remaining fluid chambers 20 and 21. Furthermore, the fluid chambers which comprise the load distribution unit may be of differing diameters to increase the range of design options, along with the alternative chamber positions.

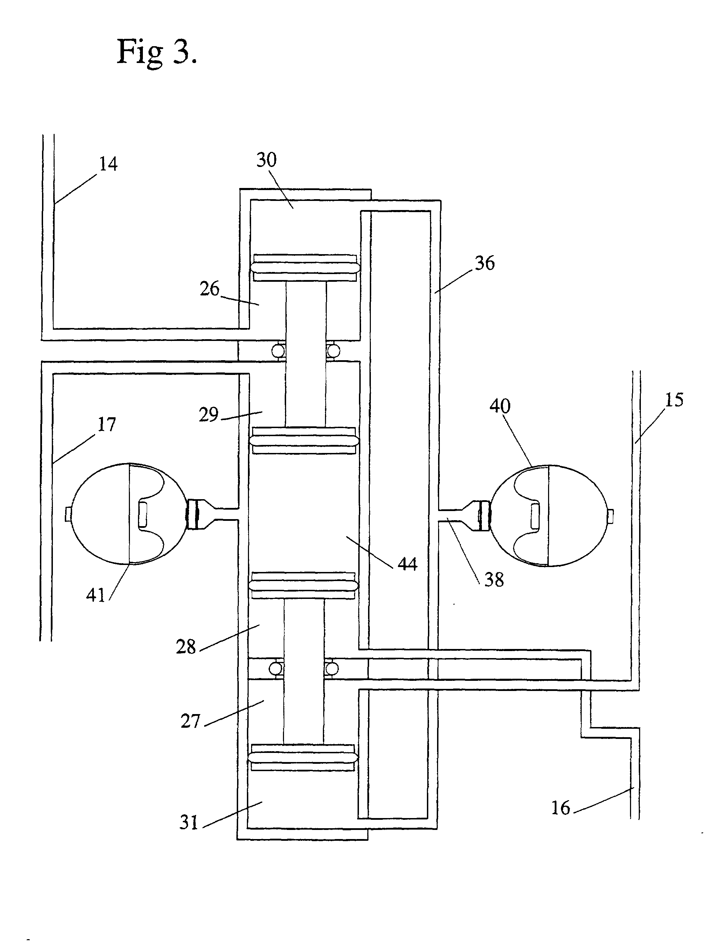

A second preferred embodiment of a load distribution unit according to the present invention is illustrated in Figure 3. The branch lines (14, 15, 16, 17) to the system fluid conduits are shown in the same layout as in Figure 1. For example, the branch line 14 connects the front left system chamber 26 of the load distribution unit to the major chamber of the front left hydraulic suspension ram. The system chambers and bump chambers aren swapped over compared to the earlier embodiments so that the system chambers are now the smaller volume chambers through which the rod passes, and the bump chambers are the larger chambers. One half of the load distribution unit has been rotated through one-hundred and eighty degrees and placed on one end of the other half, along a common axis. This places the back bump chambers together and they can be joined by removing the wall to make one common back bump chamber 44 and connected through conduit 39 to a back bump accumulator 41. The two front bump chambers 30, 31 are located at the ends of the unit and interconnected by a passage 36, communicated with the front bump accumulator 40 via conduit 38. The function of the unit is similar to the first embodiment, the main difference being that the ratio of system to bump chamber areas can be reversed to give a wider range of sizing options to the designer.

The load distribution unit may also be used in a suspension system having single acting rams. In this arrangement, the major chamber of each ram can be in direct fluid communication with a system chamber of the load distribution unit.

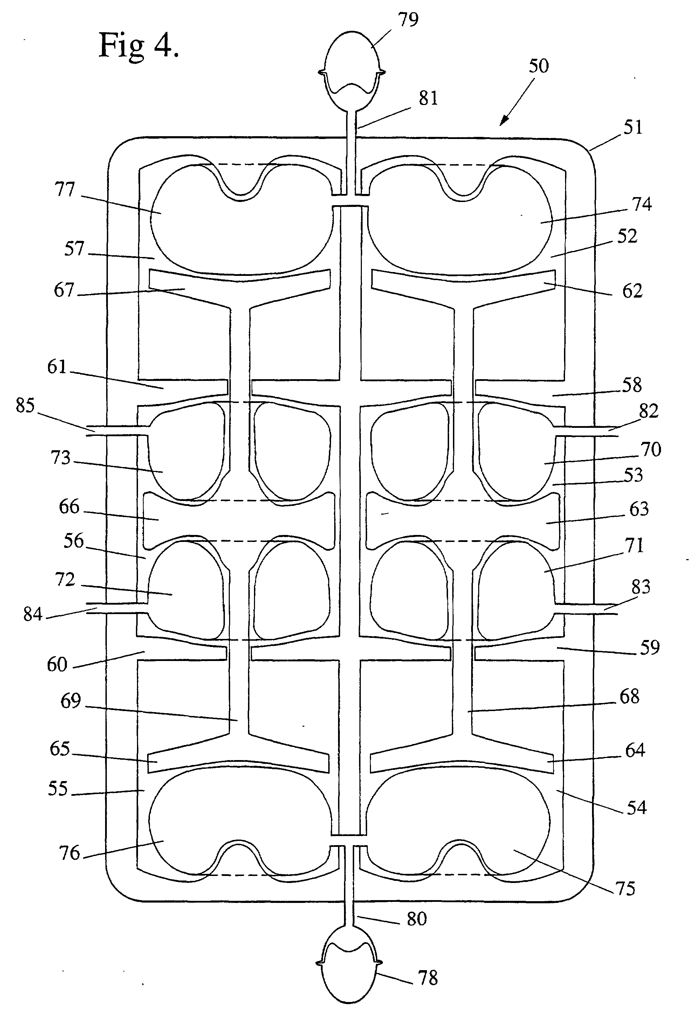

Figure 4 shows a straightforward application of fluid containers in the form of flexible bags to a third embodiment of a load distribution unit according to the present invention. The load distribution unit 50 comprises a housing 51 which is divided by dividing walls 58, 59, 60, 61 into six major chambers 52, 53, 54, 55, 56, 57 aligned along two parallel axes, three major chambers on each axis.

The major chamber in the centre on the left hand side of the figure is divided into two minor chambers by the central dividing piston 66, these minor chambers house individual system fluid bags 72, 73 respectively. Similarly, the major chamber in the centre on the right hand side of the figure is divided into two minor chambers by the central dividing piston 63, these minor chambers house individual system fluid bags 70 and 71 respectively. The system fluid bags are connected to the chambers of the actuators at each wheel by conduits 82, 83, 84, 85 in a connection sequence as described in the applicant's earlier noted patents and Patent application so will not be further detailed herein. For the purposes of describing the operation of the present invention it will be assumed that the four system fluid bags communicate with the major chambers of the rams in corresponding positions, for example the left hand side forward system fluid bag 73 communicates with the major chamber of the ram associated with the front left wheel of the vehicle.

The left hand side forward major chamber 57 is divided by piston 67 forming two minor chambers, the most forward one of which accommodates a back bump fluid bag 77. Similarly the right hand side forward major chamber 52 is divided by piston 62 forming two minor chambers, the most forward one of which accommodates the other back bump fluid bag 74. The conduit 81 joining the two back bump fluid bags and the back bump accumulator 79 permits fluid flow between the bags and from the bags into the back bump accumulator.

Similarly the rearward major chambers 54, 55 contain dividing pistons 64, 65 respectively and the front bump bags 75, 76 respectively. The front bump bags are joined to each other and to the front bump accumulator 78 by the conduit 80.

All three pistons 65, 66, 67 in the major chambers 55, 56, 57 on the left hand side of the unit 50 are joined together by the piston rod 69. Likewise the pistons 62, 63, 64 in the major chambers on the right hand side are joined together by piston rod 68.

When the front wheels of the vehicle ride over a bump and the corresponding actuators become compressed, fluid is expelled from the wheel rams into the associated system fluid bags 70, 73 in the load distribution unit. This causes the piston rods 68, 69 to be thrust rearwards, compressing the front bump fluid bags 75, 76 and forcing fluid into the associated front bump accumulator 78.

A toroidal fluid bag may alternatively be placed in each free minor chamber, replacing the larger bump bags 74, 75, 76, 77 illustrated. It should be understood that if this is done, all bump bags must be replaced in a similar manner to retain the functionality of the load distribution unit. Also the new toroidal fluid bags next to the dividing walls 58 and 61 are now front bump bags replacing the illustrated front bump bags 75, 76 at the other end of the unit. Similarly, the new toroidal fluid bags next to the dividing walls 59 and 60 are now back bump bags replacing the illustrated back bump bags 74, 77 at the opposite end of the unit.

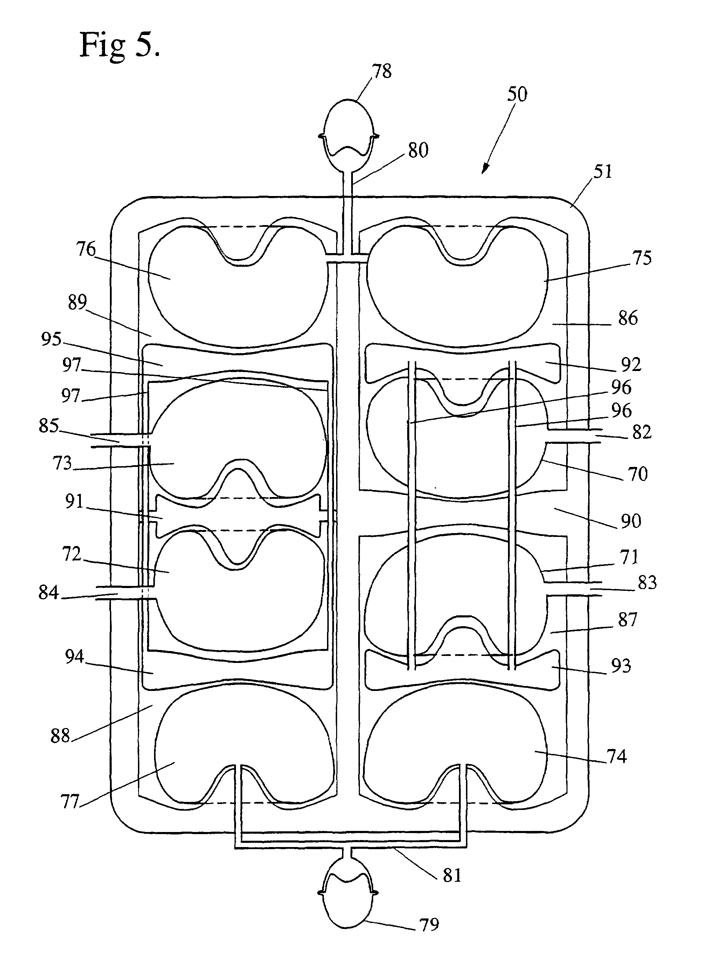

Figure 5 illustrates a fourth preferred embodiment of the load distribution unit 50 according to another aspect of the present invention. The essential functionality of the load distribution unit is not altered, yet the packaging length required is much reduced as only two aligned major chambers 86, 87 and 88, 89 are necessary on each side. The major chambers on the left hand side of the housing 51 are formed by the fixed dividing wall 91 which is shaped very like the central piston 66 in Figure 4. The forward major chamber 89 is divided into two minor chambers by the piston 95. Each of these minor chambers houses a fluid bag 73, 76. The front left system fluid bag 73 is connected to the front left wheel actuator as previously described for Figure 4, and is now positioned between the dividing wall 91 and the front left load distribution unit piston 95. The minor chamber on the other side of the piston 95 contains a front bump fluid bag 76. The rearward left hand side major chamber 88 is divided by a back left load distribution unit piston 94 into two minor chambers housing the back left system fluid bag 72 and a back bump fluid bag 77. The two left hand load distribution unit pistons 94, 95 are fixed together by bars 97 arranged around the periphery of the pistons. The back left system fluid bag 72 is housed in the minor chamber between the dividing wall 91 and the back left load distribution unit piston 94 such that as the pistons move in unison, the volume of fluid in the back left system fluid bag 72 varies substantially reciprocally with the volume of fluid in the front left system fluid bag 73.

The construction illustrated in Figure 5 for the right hand side of the load distribution unit is similar to that for the left hand side, the changes being restricted to the shaping of the dividing wall 90 forming major chambers 86, 87, and the shaping of the pistons 92, 93 in said chambers. The positioning of the fluid bags corresponds to the left hand side, so for example the front right system fluid bag 70 is housed in the minor chambers formed between the front right load distribution unit piston 92 and the dividing wall 90. On the other side of the piston 92 is a front bump fluid bag 75, which is connected to the front bump fluid bag 76 on the left hand side and the front bump accumulator 78 by the conduit 80. The back right major chamber 87 is divided by the back right load distribution unit piston 93 into two minor chambers which house the back right system fluid bag 71 and a back bump fluid bag 74. The front and back right load distribution unit pistons 92, 93 are fixed together by bars 96 arranged around the periphery of the pistons. The back right system fluid bag 71 is housed in the minor chamber between the dividing wall 90 and the back right load distribution unit piston 93 such that as the pistons move in unison, the volume of fluid in the back right system fluid bag 71 varies substantially reciprocally with the volume of fluid in the front right system fluid bag 70. The back bump fluid bags 74, 77 and the back bump accumulator 79 are connected by the conduit 81.

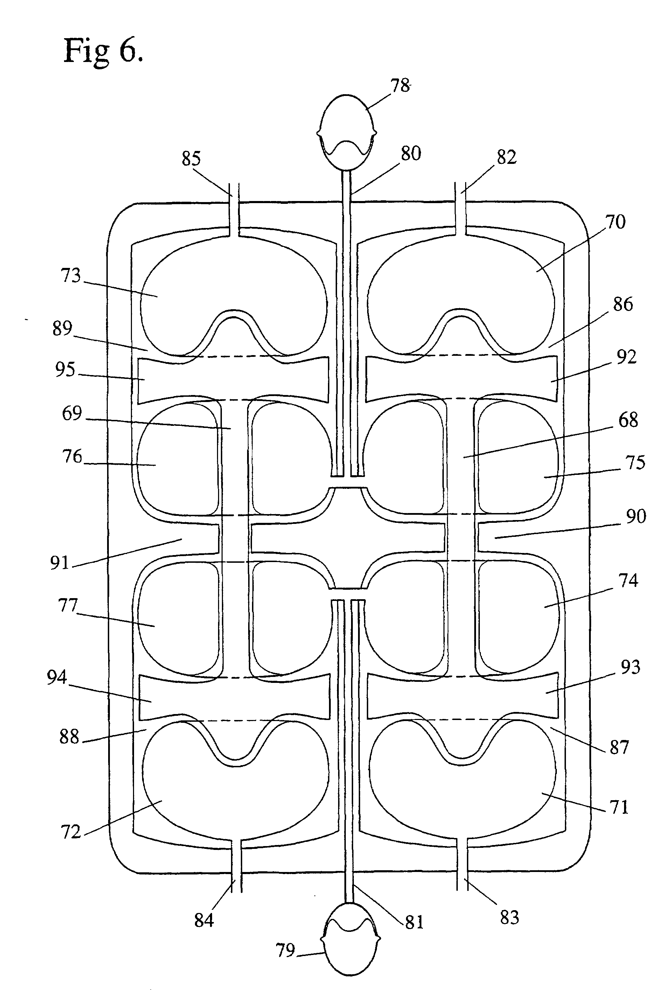

Figure 6 shows a load distribution unit 50 of similar form to that illustrated in Figure 5, the differences being largely restricted to the positioning of the bump and system fluid bags. The load distribution unit pistons are also now fixed together by piston rod 68, 69 as in Figure 4. This alternative arrangement allows the matching of pressures, areas and resultant forces to enable optimal sizing of the components during system design. The system bags 70, 71, 72, 73 now occupy the outermost minor chambers and the bump bags 74, 75, 76, 77 occupy the minor chambers on either side of the dividing walls 90, 91. For example, the front left major chamber 89 is divided by the front left load distribution unit piston 95 into two minor chambers, the outermost of which contains the front left system fluid bag 73. The other minor chamber between the front left load distribution unit piston 95 and the dividing wall 91 houses a front bump fluid bag 76 which is connected to the other front bump fluid bag 75 and the front bump accumulator by the conduit 80 as described for the preceding embodiments of the load distribution unit according to the present invention.

It should be further noted that the major chambers may be of differing volumes, the piston rods 68, 69 may be extended through the ends of the casing and the end portions have two major chambers at one end of the housing 51, and the front and back bump fluid bags may be housed in the two major chambers at the other end of the housing. Any or all of the above options can be used to assist in the matching of pressures, areas and resultant forces to enable optimal sizing of the components during system design.

Furthermore, the major chambers of the load distribution unit may be aligned along a single common axis as described in the applicant's prior patents and Patent applications. This can be achieved by, for example, rotating the left hand side portion of the load distribution unit through 180 degrees in plan view, then fixing it to either end of the right hand side portion. One of the bump fluid bags can then be discarded.

It is also envisaged that the load distribution unit be provided as two separate housings respectively controlling the left and right sides of the vehicle. These housings can then be positioned in separate locations within the vehicle.

## Claims

1. A load distribution unit (13) for a vehicle suspension system having at least one pair of laterally adjacent forward wheel assemblies (1, 2) and at least one pair of laterally adjacent rear wheel assemblies (3, 4), a wheel ram associated with each said wheel assembly, each wheel ram including a major chamber therein; **characterised in that**
the load distribution unit (13) includes two pairs of axially aligned fluid chambers (18, 21, 19, 20), each fluid chamber being divided into two control chambers by a piston (22, 23, 24, 25) supported therein, in each pair of axially aligned fluid chambers two of the control chambers which vary in volume proportionally and in opposite senses therein with piston motion are system chambers (26, 27, 28, 29), the remaining two chambers in each pair of axially aligned fluid chambers being bump chambers (30, 31, 32, 33), **in that**
the piston of each said axially aligned pair of fluid chambers is interconnected by a connection means (34, 35), the major chamber of each said wheel ram being in fluid communication with a respective said system chamber, such that the vehicle suspension system provides a roll stiffness and a pitch stiffness while providing minimal cross-axle articulation stiffness, and **in that**
a fluid communication (36, 37) is provided between pairs of the bump chambers (30, 31, 32, 33) such that the fluid pressure within the communicating bump chambers is transferable therebetween thereby to enable a pressure balance to be achieved between the system chambers (26, 27, 28, 29).

2. A load distribution unit according to Claim 1, wherein the connection means interconnecting the pistons is a rod member (34, 35) extending through the two control chambers in the middle of each pair of axially aligned fluid chambers.

3. A load distribution unit according to Claim 1 or Claim 2, wherein each said pair of bump chambers (30, 31 and 32, 33) is in fluid communication with an accumulator means (40, 41).

4. A load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein; **characterised in that**
the load distribution unit includes three fluid chambers aligned along a common axis to thereby provide opposing end chambers (26, 30 and 27, 31) and a central chamber (44) therebetween; **in that**
the end chambers are respectively divided by a piston supported therein into two control chambers (26, 30, 27, 31), the central chamber (44) being divided by pistons into two control chambers (28, 29) and a central bump chamber (44), **in that**
two of the control chambers which vary in volume proportionally and in opposite senses with piston motion are separate bump chambers (30, 31), the remaining four control chambers being system chambers; **in that**
respective connection means interconnect each of the pistons in the central chamber to the piston in an adjacent said end chamber, the major chamber of each said wheel ram being in fluid communication with a respective one of the system chambers (26, 27, 28, 29), such that the vehicle suspension system provides a roll stiffness and a pitch stiffness while providing minimal cross-axle articulation stiffness; and **in that**
the two separate bump chambers (30, 31) of each end chamber are in fluid communication such that the fluid pressure within the communicating bump chambers (30, 31) is transferable therebetween to thereby enable a pressure balance to be achieved between the system chambers.

5. A load distribution unit according to Claim 4, wherein the connection means interconnecting the pistons is a rod member extending through a said control chamber (28, 29) of the central chamber (44) and a said control chamber (26, 27) of the end chamber adjacent thereto.

6. A load distribution unit according to Claim 4 or Claim 5, wherein a flexible fluid container (70, 71, 72, 73) is located within each said system chamber and is respectively in fluid communication with the major chamber of a said wheel ram, and a flexible fluid container (74, 75, 76, 77) is located within each bump chamber, with fluid communication being provided between the fluid containers in each pair of bump chambers such that the fluid pressure within the communicating bump chambers is transferable therebetween to thereby enable a pressure balance to be achieved between the system chambers.

7. A load distribution unit according to any one of Claims 4 to 6, wherein the two separate bump chambers are in fluid communication with an accumulator means (40), and the central bump chamber is in fluid communication with an accumulator means (41).

8. A load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein, **characterised in that**
the load distribution unit includes a housing divided into a pair of chamber sets, each chamber set including two axially aligned end chambers (52, 54, 55, 57) and a central chamber (53, 56) located and axially aligned therebetween; **in that**
pistons (62, 63, 64, 65, 66, 67) are respectively located within the central chambers (53, 56) and within each said end chamber (52, 54, 55, 56), the pistons being interconnected to thereby provide for common movement of the interconnected pistons therein, the piston (63, 66) within each central chamber (53, 56) dividing said chamber into two control chambers, the piston within each said end chamber dividing said end chamber to provide a control chamber on one side thereof; **in that**
two pairs of the control chambers which vary in volume proportionally and in opposite senses with piston motion are bump chambers, the remaining two pairs of the control chambers being system chambers; **in that**
a flexible fluid container (70, 71, 72, 73) is located within each said system chamber and being respectively in fluid communication with the major chamber of a said wheel ram such that the vehicle suspension system provides a roll stiffness and a pitch stiffness while providing minimal cross-axle articulation stiffness; and **in that**
a flexible fluid container (74, 75, 76, 77) is located within each bump chamber, with fluid communication being provided between the fluid containers in each pair of bump chambers such that the fluid pressure within the communicating bump chambers is transferable therebetween to thereby enable a pressure balance to be achieved between the system chambers.

9. A load distribution unit for a vehicle suspension system having at least one pair of laterally adjacent forward wheel assemblies, and at least one pair of laterally adjacent rear wheel assemblies, a wheel ram associated with each said wheel assembly, each wheel ram including a major chamber therein; **characterised in that**
the load distribution unit includes a housing divided into a pair of chamber sets, each chamber set including two axially aligned chambers (86, 87, 88, 89); **in that**
pistons (92, 93, 94, 95) are respectively located within each said chamber, the pistons being interconnected by a connection means (68, 69) to thereby provide for common movement of the interconnected pistons therein; **in that**
each piston divides its respective chamber into two control chambers, in each pair of axially aligned chambers, two of the control chambers which vary in volume proportionally and in opposites senses therein with piston motion are system chambers, the remaining two control chambers in each pair of axially aligned chambers being bump chambers; **in that**
a flexible fluid container (70, 71, 72, 73) is located within each said system chamber and being respectively in fluid communication with the major chamber of a said wheel ram such that the vehicle suspension system provides a roll stiffness and a pitch stiffness while providing minimal cross-axle articulation stiffness; **in that**
a flexible fluid container (74, 75, 76, 77) is located within each bump chamber, with fluid communication being provided between the fluid containers of each pair of bump chambers such that the fluid pressure within the communicating bump chambers is transferable therebetween to thereby enable a pressure balance to be achieved between the system chambers.

10. A load distribution unit according to Claim 8 or Claim 9, wherein each said pair of bump chambers are in fluid communication with an accumulator means (78, 79).

11. A load distribution unit according to any one of the preceding claims, wherein the wheel ram is double acting having said major chamber and a minor chamber in which a piston rod of the wheel ram is located, the major chamber of each wheel ram being in direct fluid communication with the minor chamber of a diagonally opposite said wheel ram by a fluid communicating conduit, with each said system chamber of the load distribution unit being a fluid communication with a respective said fluid communicating conduit.

12. A load distribution unit according to any one of Claims 1 to 10, wherein the wheel rams are single acting.

13. A vehicle suspension system including a load distribution unit according to any one of the preceding claims.

## Patentansprüche

1. Lastverteileinheit (13) für ein Fahrzeugfederungssystem, das wenigstens ein Paar lateral benachbarte Vorderradbaugruppen (1, 2) und wenigstens ein Paar lateral benachbarte Hinderradbaugruppen (3, 4) hat und einen jeder Radbaugruppe zugeordneten Radzylinder, der eine Hauptkammer enthält,
**dadurch gekennzeichnet,**
**dass** die Lastverteileinheit (13) zwei Paar axial ausgerichtete Fluidkammem (18, 21, 19, 20) aufweist, wobei jede Fluidkammer durch einen darin gelagerten Kolben (22, 23, 24, 25) in zwei Steuerkammern unterteilt ist, wobei in jedem Paar axial ausgerichteter Fluidkammern zwei der Steuerkammern, die im Volumen proportional und in entgegengesetzten Richtungen mit der Kolbenbewegung darin variieren, Systemkammern (26, 27, 28, 29) sind und wobei die übrigen beiden Kammem in jedem Paar axial ausgerichteter Fluidkammern Pufferkammern (30, 31, 32, 33) sind,
**dass** die Kolben der Paare axial ausgerichteter Fluidkammem durch eine Verbindungseinrichtung (34, 35) miteinander verbunden sind, wobei die Hauptkammer jedes Radzylinders mit der zugeordneten Systemkammer in Fluidverbindung steht, so dass das Fahrzeugfederungssystem für eine Rollsteifigkeit und eine Nicksteifigkeit sorgt, wohingegen es für eine minimale Querachsengelenkbewegungssteifigkeit sorgt, und
**dass** eine Fluidverbindung (36, 37) zwischen den Paaren der Pufferkammern (30, 31, 32, 33) vorhanden ist, so dass der Fluiddruck innerhalb der kommunizierenden Pufferkammern zwischen denselben übertragbar ist, um dadurch zu ermöglichen, dass ein Druckausgleich zwischen den Systemkammern (26, 27, 28, 29) erzielt wird.

2. Lastverteileinheit nach Anspruch 1, wobei die Verbindungseinrichtung, die die Kolben miteinander verbindet, ein Stangenteil (34, 35) ist, das sich durch die beiden Steuerkammern in der Mitte von jedem Paar axial ausgerichteter Fluidkammern erstreckt.

3. Lastverteileinheit nach Anspruch 1 oder 2, wobei jedes Paar Pufferkammern (30, 31 und 32, 33) in Fluidverbindung mit einer Sammlereinrichtung (40, 41 ) ist.

4. Lastverteileinheit für ein Fahrzeugfederungssystem, das wenigstens ein Paar lateral benachbarte Vorderradbaugruppen und wenigstens ein Paar lateral benachbarte Hinderradbaugruppen hat und einen jeder Radbaugruppe zugeordneten Radzylinder, der eine Hauptkammer enthält,
**dadurch gekennzeichnet,**
**dass** die Lastverteileinheit drei Fluidkammem aufweist, die längs einer gemeinsamen Achse ausgerichtet sind, um dadurch entgegengesetzte Endkammem (26, 30 und 27, 31) sowie eine zentrale Kammer (44) zwischen denselben zu schaffen,
**dass** die Endkammem durch einen darin gelagerten Kolben in zwei Steuerkammem (26, 30, 27, 31 ) unterteilt sind, wobei die zentrale Kammer (44) durch Kolben in zwei Steuerkammern (28, 29) und in eine zentrale Pufferkammer (44) unterteilt ist,
**dass** die beiden Steuerkammem, die im Volumen proportional und in entgegengesetzten Richtungen mit der Kolbenbewegung variieren, separate Pufferkammem (30, 31) sind, wohingegen die übrigen vier Steuerkammem Systemkammern sind;
**dass** eine Verbindungseinrichtung jeden der Kolben in der zentralen Kammer mit dem Kolben in einer benachbarten Endkammer verbindet, wobei die Hauptkammer von jedem Radzylinder in Fluidverbindung mit einer der Systemkammem (26, 27, 28, 29) ist, so dass das Fahrzeugfederungssystem für eine Rollsteifigkeit und eine Nicksteifigkeit sorgt, während es für eine minimale Querachsengelenkbewegungsstefigkeit sorgt; und
**dass** die beiden separaten Pufferkammem (30, 31) jeder Endkammer in Fluidverbindung sind, so dass der Fluiddruck innerhalb der miteinander kommunizierenden Pufferkammem (30, 31) zwischen denselben übertragbar ist, um dadurch zu ermöglichen, dass ein Druckausgleich zwischen den Systemkammem erzielt wird.

5. Lastverteileinheit nach Anspruch 4, wobei die Verbindungseinrichtung, die die Kolben miteinander verbindet, ein Stangenteil ist, das sich durch die Steuerkammer (28, 29) der zentralen Kammer (44) und die Steuerkammer (26, 27) der dazu benachbarten Endkammer erstreckt.

6. Lastverteileinheit nach Anspruch 4 oder 5, wobei ein flexibler Fluidbehälter (70, 71, 72, 73) innerhalb jeder Systemkammer angeordnet und in Fluidverbindung mit der Hauptkammer des Radzylinders ist und wobei eine flexible Fluidkammer (74, 75, 76, 77) innerhalb jeder Pufferkammer angeordnet ist, wobei die Fluidverbindung, die zwischen den Fluidbehältern in jedem Paar Pufferkammern vorhanden ist, so ist, dass der Fluiddruck innerhalb der kommunizierenden Pufferkammem zwischen denselben übertragbar ist, um dadurch zu ermöglichen, dass ein Druckausgleich zwischen den Systemkammern erzielt wird.

7. Lastverteileinheit nach einem der Ansprüche 4 bis 6, wobei die beiden separaten Pufferkammem in Fluidverbindung mit einer Sammlereinrichtung (40) sind und wobei die zentrale Pufferkammer in Fluidverbindung mit einer Sammlereinrichtung (41) ist.

8. Lastverteileinheit für ein Fahrzeugfederungssystem, das wenigstens ein Paar lateral benachbarte Vorderradbaugruppen und wenigstens ein Paar lateral benachbarte Hinderradbaugruppen hat und einen jeder Radbaugruppe zugeordneten Radzylinder, der eine Hauptkammer enthält,
**dadurch gekennzeichnet,**
**dass** die Lastverteileinheit ein Gehäuse aufweist, das in ein Paar Kammersätze unterteilt ist, wobei jeder Kammersatz zwei axial ausgerichtete Endkammem (52, 54, 55, 57) und eine zentrale Kammer (53, 56) aufweist, die zwischen denselben angeordnet und axial ausgerichtet ist;
**dass** Kolben (62, 63, 64, 65, 66, 67) innerhalb der zentralen Kammern (53, 56) und innerhalb jeder Endkammer (52, 54, 55, 56) angeordnet sind, wobei die Kolben miteinander verbunden sind, um dadurch darin für eine gemeinsame Bewegung der miteinander verbundenen Kolben zu sorgen, wobei der Kolben (63, 66) innerhalb jeder Zentralkammer (53, 56) die Kammer in zwei Steuerkammem unterteilt und wobei der Kolben innerhalb jeder Endkammer die Endkammer unterteilt, um eine Steuerkammer auf einer Seite derselben zu schaffen;
**dass** die beiden Paar Steuerkammem, die im Volumen proportional und in entgegengesetzten Richtungen mit der Kolbenbewegung variieren, Pufferkammern sind, wo hingegen die übrigen beiden Paar Steuerkammem Systemkammern sind;
**dass** ein flexibler Fluidbehälter (70, 71, 72, 73) innerhalb jeder Systemkammer angeordnet und in Fluidverbindung mit der Hauptkammer eines der Radzylinder ist, so dass das Fahrzeugfederungssystem für eine Rollsteifigkeit und eine Nicksteifigkeit sorgt, wohingegen es für eine minimale Querachsengelenkbewegungssteifigkeit sorgt; und
**dass** ein flexibler Fluidbehälter (74, 75, 76, 77) in jeder Pufferkammer angeordnet ist, wobei die Fluidverbindung zwischen den Fluidbehältern vom jedem Paar Pufferkammern so ausgebildet ist, dass der Fluiddruck innerhalb der kommunizierenden Pufferkammern zwischen denselben übertragbar ist, um dadurch zu ermöglichen, dass ein Druckausgleich zwischen den Systemkammern erzielt wird.

9. Lastverteileinheit für ein Fahrzeugfederungssystem, das wenigstens ein Paar lateral benachbarte Vorderradbaugruppen und wenigstens ein Paar lateral benachbarte Hinderradbaugruppen hat und einen jeder Radbaugruppe zugeordneten Radzylinder, der eine Hauptkammer enthält,
**dadurch gekennzeichnet,**
**dass** die Lastverteileinheit ein Gehäuse aufweist, das in ein Paar Kammersätze unterteilt ist, wobei jeder Kammersatz zwei axial ausgerichtete Kammern (86, 87, 88, 89) aufweist;
**dass** die Kolben (92, 93, 94, 95) in jeder Kammer angeordnet sind, wobei die Kolben durch eine Verbindungseinrichtung (68, 69) miteinander verbunden sind, um dadurch darin für eine gemeinsame Bewegung der miteinander verbundenen Kolben zu sorgen;
**dass** jeder Kolben seine zugeordnete Kammer in zwei Steuerkammern unterteilt, wobei in jedem Paar axial ausgerichteter Kammern zwei der Steuerkammem, die darin im Volumen proportional und in entgegengesetzten Richtungen mit der Kolbenbewegung variieren, Systemkammem sind und wobei die übrigen beiden Steuerkammem in jedem Paar axial ausgerichteter Kammern Pufferkammern sind;
**dass** ein flexibler Fluidbehälter (70, 71, 72, 73) innerhalb jeder Systemkammer angeordnet und mit der Hauptkammer von einem der Radzylinder in Fluidverbindung ist, so dass das Fahrzeugfederungssystem für eine Rollsteifigkeit und eine Nicksteifigkeit sorgt, wohingegen es für eine minimale Querachsengelenkbewegungssteifigkeit sorgt;
**dass** eine flexibler Fluidbehälter (74, 75, 76, 77) in jeder Pufferkammer angeordnet ist, wobei die Fluidverbindung zwischen den Fluidbehältem von jedem Paar Pufferkammern so ausgebildet ist, dass der Fluiddruck innerhalb der kommunizierenden Pufferkammern zwischen denselben übertragbar ist, um dadurch zu ermöglichen, dass ein Druckausgleich zwischen den Systemkammern erzielt wird.

10. Lastverteileinheit nach Anspruch 8 oder 9, wobei jedes Paar Pufferkammern mit einer Sammlereinrichtung (78, 79) in Fluidverbindung ist.

11. Lastverteileinheit nach einem der vorhergehenden Ansprüche, wobei der Radzylinder doppelwirkend ist und die Hauptkammer und eine Nebenkammer hat, in welcher eine Kolbenstange des Radzylinders angeordnet ist, wobei die Hauptkammer jedes Radzylinders durch eine Fluidverbindungsleitung in direkter Fluidverbindung mit der Nebenkammer eines diagonal entgegengesetzten Radzylinders ist und wobei jede Systemkammer der Lastverteileinheit in Fluidverbindung mit einer der Fluidverbindungsleitungen ist.

12. Lastverteileinheit nach einem der Ansprüche 1 bis 10, wobei die Radzylinder einzelwirkend sind.

13. Fahrzeugfederungssystem mit einer Lastverteileinheit nach einem der vorhergehenden Ansprüche.

## Revendications

1. Unité de distribution de charge (13) pour un système de suspension de véhicule présentant au moins une paire d'ensemble de roues avants latéralement adjacentes (1, 2) et au moins une paire d'ensemble de roues arrières latéralement adjacentes (3, 4), un bélier de roue associé à chaque dit ensemble de roues, chaque bélier de roue comprenant à l'intérieur une chambre majeure ; **caractérisé en ce que**
l'unité de distribution de charge (13) comprend deux paires de chambres de fluide alignées de manière axiale (18, 21, 19, 20), chaque chambre de fluide étant divisée en deux chambres de commande par un piston (22, 23, 24, 25) supportées à l'intérieur dans chaque paire de chambre de fluide alignée de manière axiale, deux des chambres de commande qui varient proportionnellement en volume et en sens opposé à l'intérieur avec le mouvement du piston sont des chambres de système (26, 27, 28, 29), les deux chambres restantes dans chaque paire de chambres de fluide alignées de manière axiale étant des chambres de collision (30, 31, 32, 33), **en ce que**
le piston de chaque paire de chambres de fluide alignées de manière axiale est interconnecté par des moyens de connexion (34, 35), la chambre majeure de chaque dit bélier de roue étant en communication fluidique avec une dite chambre de système respective, de telle sorte que le système de suspension de véhicule fournit une rigidité au roulement et une rigidité au tangage tout en fournissant une rigidité minimale de l'articulation de l'essieu transversal, et **en ce que**
une communication fluidique (36, 37) est prévue entre des paires de chambres de collision (30, 31, 32, 33) de telle sorte que la pression fluidique dans les chambres de collision en communication peut être transférée entre elle permettant ainsi un équilibrage de pression à obtenir entre les chambres de système (26, 27, 28, 29).

2. Unité de distribution de charge selon la revendication 1, dans laquelle les moyens de connexion interconnectant les pistons sont un élément de tige (34, 35) s'étendant à travers les deux chambres de commande au milieu de chaque paire de chambres de fluide alignées de manière axiale.

3. Unité de distribution de charge selon la revendication 1 ou 2, dans laquelle chacune desdites paires de chambres de collision (30, 31 et 32, 33) est en communication fluidique avec des moyens accumulateurs (40, 41).

4. Unité de distribution de charge pour un système de suspension de véhicule présentant au moins une paire d'ensembles de roues avants latéralement adjacentes, et au moins une paire d'ensembles de roues arrières latéralement adjacentes, un bélier de roue associé à chaque dit ensemble de roues, chaque bélier de roue comprenant une chambre majeure à l'intérieur ; **caractérisé en ce que**
l'unité de distribution de charge comprend trois chambres de fluide alignées le long d'un axe commun pour ainsi fournir des chambres d'extrémité opposée (26, 30 et 27, 31) et une chambre centrale (44) entre lesdites chambres d'extrémité opposée ; **en ce que**
les chambres d'extrémité sont respectivement séparées par un piston supporté à l'intérieur en deux chambres de commande (26, 30, 27, 31) la chambre centrale (44) étant séparée par des pistons en deux chambres de commande (28, 29) et en une chambre de collision centrale (44), **en ce que**
deux des chambres de commande qui varient proportionnellement en volume et en sens opposé avec le mouvement du piston sont des chambres de collision séparée (30, 31), les quatre chambres de commande restantes étant des chambres de système ; **en ce que**
des moyens de connexion respectifs interconnectent chacun des pistons dans la chambre centrale au piston dans une dite chambre d'extrémité adjacente, la chambre majeure de chaque dit bélier de roue étant en communication fluidique avec une desdites chambres de système respective (26, 27, 28, 29) de telle sorte que le système de suspension du véhicule fournit une rigidité au roulement et une rigidité au tangage tout en fournissant une rigidité minimale d'articulation de l'essieu transversal ; et **en ce que**
les deux chambres de collision séparées (30, 31) de chaque chambre d'extrémité sont en communication fluidique de telle sorte que la pression fluidique dans les chambres de collision communicantes (30, 31) peut être transférée entre elles pour ainsi permettre un équilibrage de pression à obtenir entre les chambres de système.

5. Unité de distribution de charge selon la revendication 4, dans laquelle les moyens de connexion interconnectant les pistons sont un élément de tige s'étendant à travers une dite chambre de commande (28, 29) de la chambre centrale (44) et une dite chambre de commande (26, 27) de la chambre d'extrémité adjacente à celle-ci.

6. Unité de distribution de charge selon la revendication 4 ou 5, dans laquelle un conteneur de fluide flexible (70, 71, 72, 73) est situé dans chaque dite chambre de système et est respectivement en communication fluidique avec la chambre majeure d'un dit bélier de roue, et un conteneur de fluide flexible (74, 75, 76, 77) est situé dans chaque chambre de collision, avec une communication fluidique étant prévue entre les conteneurs de fluide dans chaque paire de chambre de collision de telle sorte que la pression du fluide dans les chambres de collision communicantes peut être transférée entre elles pour ainsi permettre un équilibrage de pression à obtenir entre les chambres de système.

7. Unité de distribution de charge selon l'une quelconque des revendications 4 à 6, dans laquelle les deux chambres de collision séparées sont en communication fluidique avec des moyens accumulateur (40), et la chambre de collision centrale est en communication fluidique avec des moyens accumulateur (41).

8. Unité de distribution de charge pour un système de suspension de véhicule présentant au moins une paire d'ensemble de roues avants latéralement adjacentes, et au moins une paire d'ensemble de roues arrières latéralement adjacentes, un bélier de roues associé à chaque dit ensemble de roues, chaque bélier de roue comprenant une chambre majeure à l'intérieur, **caractérisé en ce que**
l'unité de distribution de charge comprend un logement divisé en une paire d'ensembles de chambres, chaque ensemble de chambres comprenant deux chambres d'extrémité axialement alignées (52, 54, 55, 57) et une chambre centrale (53, 56) situées et alignées de manière axiale entre elles ; **en ce que**
des pistons (62, 63, 64, 65, 66, 67) sont respectivement situés dans les chambres centrales (53, 56) et dans chaque dites chambres d'extrémités (52, 54, 55, 56), les pistons étant interconnectés pour ainsi fournir un mouvement commun des pistons interconnectés à l'intérieur, le piston (63, 66) dans chaque chambre centrale (53, 56) divisant ladite chambre en deux chambres de commande, le piston dans chaque dite chambre d'extrémité divisant ladite chambre d'extrémité pour fournir une chambre de commande sur un côté de celle-ci ; **en ce que**
deux paires de chambre de commande qui varient proportionnellement en volume et en sens opposé avec le mouvement du piston sont des chambres de collision, les deux paires restantes des chambres de commande étant des chambres de système ; **en ce que**
un conteneur de fluide flexible (70, 71, 72, 73) est situé à l'intérieur de chaque dite chambre de système et étant respectivement en communication fluidique avec la chambre majeure d'un dit bélier de roue de telle sorte que le système de suspension de véhicule fournit une rigidité au roulement et une rigidité au tangage tout en fournissant une rigidité minimale d'articulation de l'essieu transversal et **en ce que**
un conteneur de fluide flexible (74, 75, 76, 77) est situé dans chaque chambre de collision avec une communication fluidique étant prévue entre les conteneurs de fluide dans chaque paire de chambres de collision de telle sorte que la pression du fluide dans les chambres de collision communicantes peut être transférée entre elles pour ainsi permettre un équilibrage de pression à obtenir entre les chambres de système.

9. Unité de distribution de charge pour un système de suspension de véhicule présentant au moins une paire d'ensembles de roues avants latéralement adjacentes, et au moins une paire d'ensemble de roues arrières latéralement adjacentes, un bélier de roue associé à chaque dit ensemble de roue, chaque bélier de roue comprenant une chambre majeure à l'intérieur ; **caractérisé en ce que**
l'unité de distribution de charge comprend un logement divisé en une paire d'ensembles de chambre, chaque ensemble de chambre comprenant deux chambres alignées de manière axiale (86, 87, 88, 89) ; **en ce que**
les pistons (92, 93, 94, 95) sont respectivement situés dans chaque dite chambre, les pistons étant interconnectés par des moyens de connexion (68, 69) pour ainsi fournir un mouvement commun des pistons interconnectés à l'intérieur ; **en ce que**
chaque piston divise sa chambre respective entre deux chambres de commande, dans chaque paire de chambre alignée de manière axiale, deux des chambres de commande qui varient proportionnellement en volume et en sens opposé à l'intérieur avec le mouvement du piston sont des chambres de système ; les deux chambres de commande restantes dans chaque paire de chambres alignées de manière axiales étant des chambres de collision ; **en ce que**
un conteneur de fluide flexible (70, 71, 72, 73) est situé dans chaque dite chambre de système et étant respectivement en communication fluidique avec la chambre majeure d'un dit bélier de roue de telle sorte que le système de suspension de véhicule fournit une rigidité au roulement et une rigidité au tangage tout en fournissant une rigidité minimale d'articulation d'essieu transversal ; **en ce que**
un conteneur de fluide flexible (74, 75, 76, 77) est situé dans chaque chambre de collision avec une communication fluidique étant prévue entre les conteneurs de fluide de chaque paire de chambres de collision de telle sorte que la pression fluidique dans les chambres de collision communicante peut être transférée entre elles pour ainsi permettre un équilibrage de pression à obtenir entre les chambres de système.

10. Unité de distribution de charge selon la revendication 8 ou 9, dans laquelle chaque dite paire de chambres de collision est en communication fluidique avec des moyens accumulateur (78, 79).

11. Unité de distribution de charge selon l'une quelconque des revendications précédentes, dans laquelle le bélier de roues est à double effets présentant ladite chambre majeure et une chambre mineure dans laquelle une tige de piston du bélier de roue est située, la chambre majeure de chaque bélier de roue étant en communication fluidique directe avec la chambre mineure d'un dit bélier de roue diagonalement opposé par un conduit de communication fluidique, avec chaque dite chambre de système de l'unité de distribution de charge étant en communication fluidique avec un dit conduit de communication fluidique respectif.

12. Unité de distribution de charge selon l'une quelconque des revendications 1 à 10, dans lequel les béliers de roue sont à effet unique.

13. Système de suspension de véhicule comprenant une unité de distribution de charge selon l'une quelconque des revendications précédentes.
